# EUROPEAN PATENT APPLICATION

(11) **EP 2 325 761 A1**
(43) Date of publication of application: **25.05.2011**
(21) Application number: 10192126.0
(22) Date of filing: 22.11.2010
(51) Int. Cl.: G06F 17/30, G06F 9/44

(54) **Systems and methods for thumbnail management using a thumbnail cache**

(30) Priority: 23.11.2009 US 263808 P
(71) Applicant: Kaila, Ashish, Mississauga, ON L4W 0B4 (CA); McSheffrey, Grant Matthew, Kanata, ON K2K 2A5 (CA)
(72) Inventor: Kaila, Ashish, Mississauga, ON L4W 0B4 (CA); McSheffrey, Grant Matthew, Kanata, ON K2K 2A5 (CA)
(74) Representative: Roberts, Gwilym Vaughan

(57) **Abstract**

Method and system for retrieving and displaying media content (e.g. thumbnail) in a cache for display on a graphical user interface are disclosed. The method and system are used for selecting media content to be synchronized between computing devices (e.g. personal computer, mobile device).

## Description

### Related Application(s)

This application claims the benefit of priority under 35 U.S.C. 119(e) to United States Provisional Patent Application Serial No. 61/263,808 filed 23 November 2009, which is incorporated herein by reference in its entirety.

### Background

Access to information is an important factor in the activities of individuals in modern society. Improvements to the flow of information enhance one's ability to interact with others, to respond to changing needs, and to avail oneself of enjoyment from processing various media based information.

### Brief Description of the Drawings

Embodiments of the disclosure are illustrated by way of example and not limitation in the figures of the accompanying drawings in which:

Figure 1 is a functional block diagram of a system for managing media content according to various embodiments.

Figures 2 and 3 are block diagrams of the system for managing media content according to alternate embodiments.

Figure 4 is a flow chart of a method of sorting media files according to various embodiments.

Figure 5 is a flow chart of a method of displaying media files in a graphical user interface having both a visible portion and a non-visible portion according to various embodiments.

Figure 6 is a flowchart of a method of enhancing a media file according to various embodiments.

Figure 7 is a functional block diagram of a system for managing media content according to various embodiments.

Figure 8 is a block diagram of an architecture for transferring media content between media synchronization engines of a system and mobile wireless communications devices according to various embodiments.

Figure 9 illustrates a block diagram of a system that may synchronize media files with a destination device according to various embodiments.

Figure 10 depicts a diagram of an embodiment of a system having a controller and a memory system according to various embodiments.

### Detailed Description

Certain specific details are set forth in the following description and figures to provide a thorough understanding of various embodiments. Those of ordinary skill in the relevant art will understand that they can practice other embodiments without one or more of the details described below. In addition, the various methods are described by reference to a sequence of operations in the following disclosure; however, the description as such is for providing a clear implementation of embodiments of the disclosure, and the particular sequence described should not be taken as required.

In general, it is contemplated that the various systems, methods, and computer readable media disclosed herein will be implemented within a system for managing media content. Such a system may generally be described as a computer-implemented or a computerized system that includes "subsystems" for providing and managing thumbnails in the manner described below.

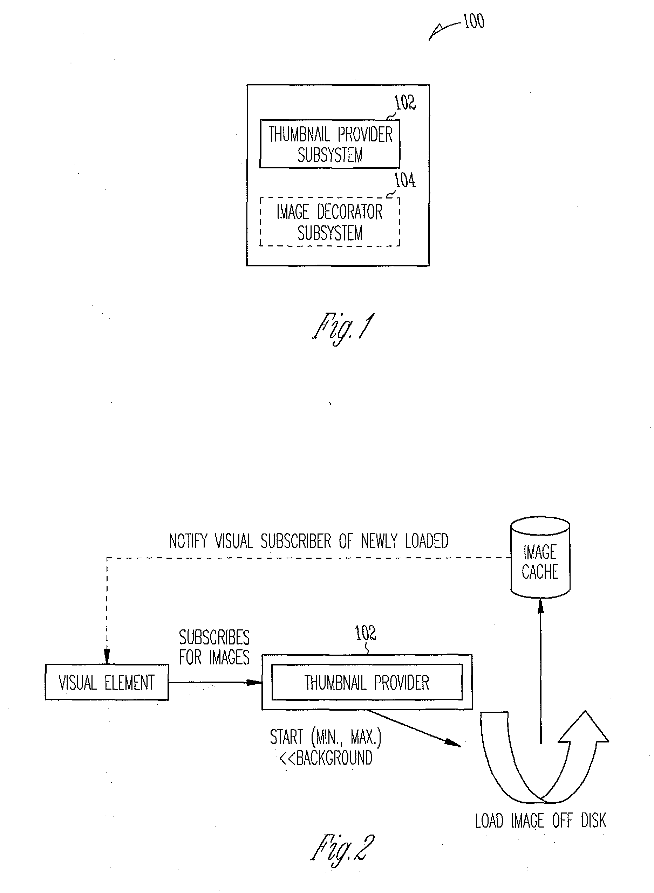

***System Overview.*** Figure 1 is a functional block diagram of a system for managing media content 100. The system for managing media content 100 may allow users to efficiently sort and group images from a centralized cache based on a given grouping/sorting criteria (including, but not limited to, image location in a folder, date/time when image was taken, size of image, etc).

The system for managing media content 100 also may determine the user's view space for images and may only request loading of the images that fit a view space. The view space is a visible part of a user interface. If a portion of the user interface is not in the visible scrollable area, then it is not part of the view space. As a result, the system for managing media content does not need to load the entire image library. Also if view space is modified (for example if a user has scrolled the view) the new view space is calculated, the previous range of view space image fetch is cancelled and the new view space is set to be loaded.

The system for managing media content 100 may allow a user to cache out entities in the event that a memory or image count threshold is reached in order to conserve memory for the process and to improve performance. The system for managing media content 100 also may style images in-memory by efficiently applying pre-defined styles to the loaded thumbnails before handing it out to the visual subscribers.

In the example embodiment shown in Figure 1, the system for managing media content 100 comprises a thumbnail provider subsystem 102 and an optional image decorator subsystem 104. The thumbnail provider subsystem 102 sorts image files by category and fetches image files associated with a visible portion of a graphical user interface. In one embodiment, the thumbnail provider subsystem 102 comprises the following components which are further described below: IThumbnailProvider, ThumbnailProvider, ThumbnailGroupProvider, ThumbailGroup, ThumbnailView, and ThumbnailSorter.

IThumbnailProvider - This is an interface that a component may implement to provide thumbnail information to a visual component. This interface may comprise one or more of the following capabilities:
a. ThumbnailLoaded event - This event may be triggered when a new thumbnail is loaded. A visual subscriber may then apply the loaded thumbnail to its visual space. A visual control is a part of user interface visible to the user and receives notifications from several non-visual components to update its state. For example if a background process is loading images, it may notify the visual subscriber that an image has been added and is available; and the visual subscriber upon being notified may display this image in its visual space.
b. ThumbnailsCleared event - This event may notify the visual subscribers when a threshold for cache is reached (by number of loaded pictures for example) due to which cache may be cleared. Then, the visual subscriber may clear its view space and re-build images received from thumbnail provider.
c. Count - This is a total number of thumbnails. This may include a number of images that have been loaded and cached as well as a number of images that are still to be fetched.
d. Start (lower range, upper range) - This may start a background process to fetch thumbnails for a specified range of images. If there already is a process processing an earlier range of images, that process is cancelled prior to fetching images in the new range.
e. Get (index) / TryGet (index) - This may return an image from cache that is present at a specified index. If the index is not loaded and cached, Get may throw an error or TryGet may return a null image
f. IsThumbnailLoaded (index) - This may determine whether thumbnail at the specified index is present in the cache (Result: true) or not (Result: false).

ThumbnailProvider - An example implementation of IThumbnailProvider with a centralized cache and background process for fetching images. This component is also referred to parent thumbnail provider as other thumbnail provider "types" such as ThumbnailGroupProvider (see below) may refer to this component for the image cache.

ThumbnailGroupProvider - Another example implementation of IThumbnailProvider that may not hold any cache or process but may simply act as an index translator for sorted groups and may use ThumbnailProvider (see above) internally to obtain the indexed image. The first image in the group may be located at the "group index" of the group within the parent ThumbnailProvider's index of images and the last image in the group may be located at "group index + Count - 1" index within the parent ThumbnailProvider.

ThumbailGroup - Represents a thumbnail group. It consists of a thumbnail provider that may provide images belonging to the group and group name text.

ThumbnailView- This view leverages the inbuilt virtualized image range (which prevents loading of all thumbnails at once) to request images from ThumbnailProvider (via Start (start range, end range) function). Once ThumbnailProvider loads an image from the disk (using the same Windows shell API that renders images in windows shell) it may notify ThumbnailView via ThumbnailLoaded event and ThumbnailView replaces the placeholder image with the actual loaded image.

ThumbnailSorter- This component may sort thumbnails into groups based on a specified criteria (e.g. timestamp or location of folder) and may provide an open process to do so. In an example embodiment, the parameters for this process are as follows:
a. Type of group - In an example embodiment, the timestamp may be used to group thumbnails by date.
b. Decorator - Decorator to decorate images (as further described below).
c. Group assigner function - Given an image, this function may compute the group to which the image belongs. For example, a function that returns timestamp of image.
d. Group name function - Given a group type value (such as a timestamp) this function may return a textual representation of group name (such as formatted date time).
e. Comparer - A function that may compare two groups of a type specified as a parameter. This is an optional parameter and may be supplied for custom group types (in some embodiments, inbuilt types such as timestamp may be compared natively by the platform and may not need this parameter).
f. List of pictures to be sorted / grouped

In an example embodiment, the ThumbnailSorter process operates as follows:

1. Iterate over all images and for each image:
a. Use the Group Assigner Function to determine a group where the image belongs.
b. If the group has been constructed before, add this image to a list of images for the group. Otherwise construct a new list corresponding to the group, add this image, and remember the group for future use.

2. Create a parent ThumbnailProvider and add all the images to this provider from all the groups one group at a time with the image decorator specified as a parameter. This ensures that images from a particular group are consecutively placed in the parent ThumbnailProvider and hence child ThumbnailGroupProvider(s) (that simply use parent thumbnail provider for fetching images by translating image indices) may not need to store explicit list of images (they can work with a start index and number of images in group to cover all the images in the parent thumbnail provider). This eliminates certain memory requirements for the process and also eliminates the need to maintain another data structure which improves overall efficiency of the system for managing media content.

3. Finally the process iterates over all the computed groups and for each group:
a. An instance of Thumbnail GroupProvider is created which refers to the parent ThumbnailProvider created in step 2 above. Internally, uses a group index (index of the first image in parent ThumbnailProvider that belongs to this group) and group image count to iterate over all the images.
b. A new instance of ThumbnailGroup is created with the thumbnail group name text computed from group name function, and IThumbnailProvider computed in the previous step.

4. Finally all ThumbnailGroup instances created in the previous step are returned as results of the process.

In some embodiments, the system for managing media content 100 comprises an optional image decorator subsystem. The image decorator subsystem 104 adds a style to an image file. Image Decorator 104 has the ability to decorate images in-memory as it passes thumbnails back to the visual element. An image may be decorated by the ImageDecorator which in turn applies styles to the image to obtain the final decorated image.

In some embodiments, the system for managing media content 100 may implement a cache clearing process to clear thumbnails from the cache. The cache clearing process may wait until a predetermined maximum number of thumbnails is reached in the cache (MaxThumbnailsInCache) and then in one embodiment clears out about half of the thumbnails entries. This may be done by iterating through the collection of thumbnails and marking for removal any entries that are at least (MaxThumbnailsInCache / 4) indices outside the current range (up to a maximum of half the entries). In one embodiment, the maximum number of thumbnails in the cache is at least 4 times larger than the largest possible range size (visible portion of the graphical user interface); this will create enough candidates for removal.

An example embodiment of the cache clearing process is as follows:

1) When caching thumbnails, if MaxThumbnailsInCache is exceeded, do the following:

a. Set the low end of the "clearing threshold" to be (start index of the current thumbnail range - (MaxThumbnailsInCache / 4)).

b. Set the high end of the "clearing threshold" to be (end index of the current thumbnail range + (MaxThumbnailsInCache / 4)).

c. For each thumbnail currently in the cache:

i. If the thumbnail's index is above or below the clearing threshold:

1. Add it to the list of thumbnails to clear.

2. If half of MaxThumbnailsInCache are cleared, then stop clearing thumbnails.

d. For each thumbnail marked for clearing:

i. Remove the thumbnail from the cache.

e. Raise the ThumbnailsCleared event to inform listeners that the cache has had thumbnails removed.

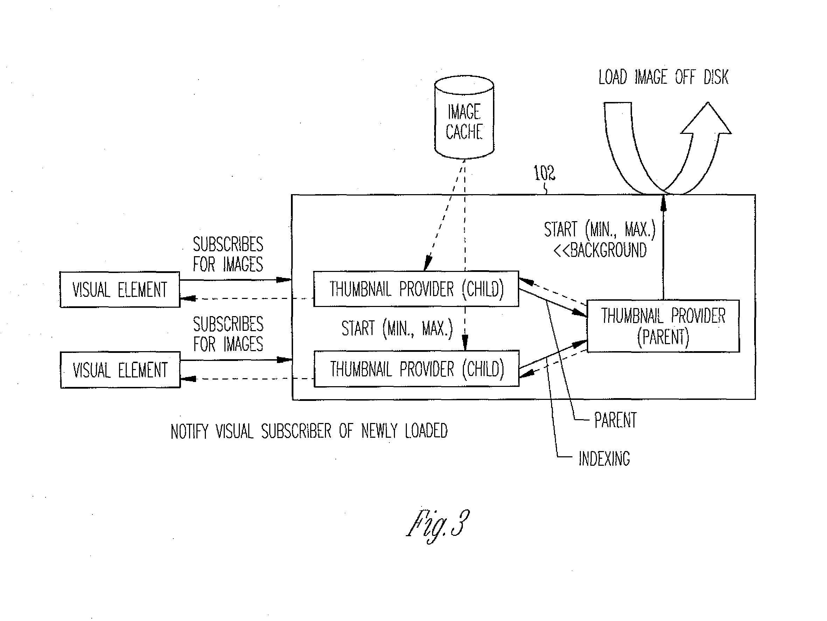

Figures 2 and 3 are block diagrams of the system for managing media content 100 according to alternate embodiments. In the example embodiment shown in Figure 2, a visual element such as a preview application requests images from the thumbnail provider subsystem 102. The thumbnail provider subsystem 102 loads the thumbnail from a storage device and adds the thumbnail to the image cache. The image cache notifies the visual element that the new thumbnail is available. In one embodiment, the image decorator subsystem (not shown in Figure 2) applies a predefined style to the thumbnail before the thumbnail is presented by the visual element.

In the example embodiment shown in Figure 3, the thumbnail provider subsystem 102 identifies image files associated with a visible portion of a preview application, fetches the image files associated with the visible portion of the preview application from a storage device, and stores the image files in a cache memory. The thumbnail provider subsystem 102 sorts the image files in the cache memory into groups based on specified criteria. In some embodiments, the image decorator subsystem (not shown) applies a style to at least some of the image files from the cache memory prior to display of image files by the visual element. The visual element displays the image files using a preview application. In one embodiment, the visual element may receive a selection of at least one of the image files to synchronize with a mobile device.

***Methods.*** In this section, particular methods of example embodiments are described by reference to a series of flow charts. In one embodiment, the methods to be performed constitute computer programs made up of computer-executable instructions for execution by a processor.

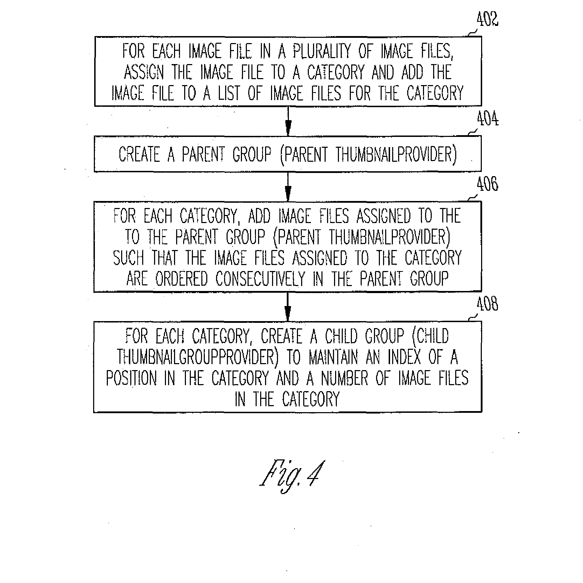

Figure 4 is a flow chart of a method of sorting media files according to an example embodiment. In some embodiments, the method shown in Figure 4 is to be performed by a media synchronization engine running on a computer system. At block 402, the method of sorting image files assigns each image file to a category and adds each image file to a list of image files for the category. At block 404, a parent group is created. At block 406, image files assigned to each category are added to the parent group such that the image files assigned to each category are ordered consecutively in the parent group. At block 408, a child group is created for each category. The child group maintains an index of a position in the parent group of a first image file in the category and a number of image files in the category.

In an alternate embodiment, if a list for image files in a particular category does not exist, a list is created. In still another embodiment, the method further comprises specifying a style for the image. In some embodiments, the plurality of image files are thumbnail files. In some embodiments, the parent group is an instance of ThumbnailProvider. In some embodiments, the child group is an instance of ThumbnailGroupProvider. In some embodiments, the plurality of image files are maintained in a cache memory. In some embodiments, the plurality of image files comprise image files from at least two media sources.

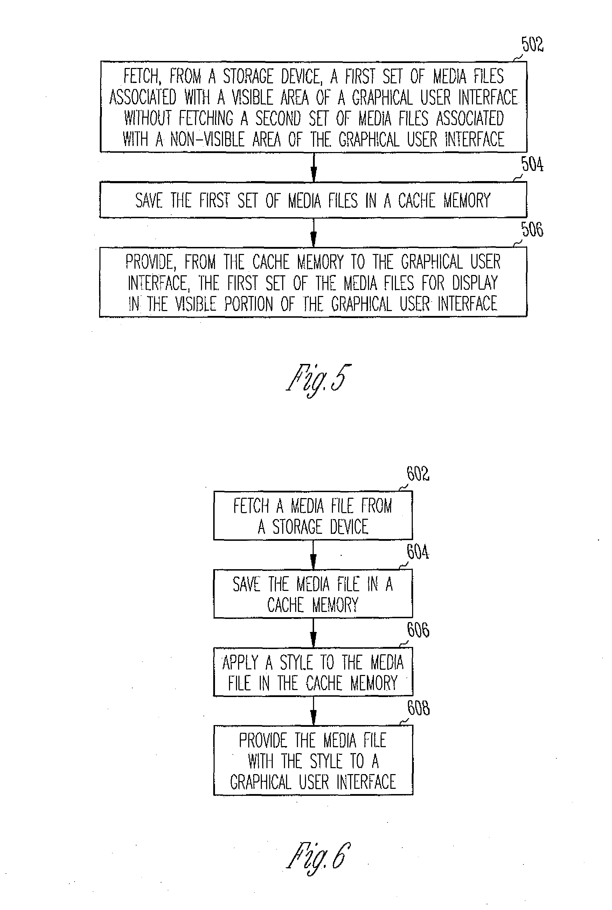

Figure 5 is a flow chart of a method of displaying media files in a graphical user interface having both a visible portion and a non-visible portion. The method of displaying media files comprises fetching, from a storage device, a first set of media files associated with a visible area of a graphical user interface without fetching a second set of media files associated with a non-visible area of the graphical user interface (block 502). At block 504, the first set of media files is saved in a cache memory. At block 506, the first set of the media files for display in the visible portion of the graphical user interface is provided from the cache memory to the graphical user interface.

In some embodiments, the act of fetching the first set of media files is cancelled upon a change in the visible portion of the user interface and an updated set of media files associated with an updated visible portion of the user interface is requested. In some embodiments, a change in the visible portion of the user interface is a result of scrolling. In some embodiments, the media files are image files. In some embodiments, the image files are thumbnail images.

Figure 6 is a flowchart of a method of enhancing a media file. The method comprises fetching a media file from a storage device (block 602) and saving the media file in a cache memory (block 604). At block 606, a style is applied to the media file in the cache memory and at block 608 the media file with the style is provided to a graphical user interface.

In some embodiments, the media file is displayed with the style in a preview application. In some embodiments, the style is a border for the media file. In some embodiments, the media file is an image file. In some embodiments, the image file is a thumbnail file.

***Example Operating Environment.*** Various examples of systems and methods for embodiments of the disclosure have been described above. This section provides several example operating environments for the various systems and methods.

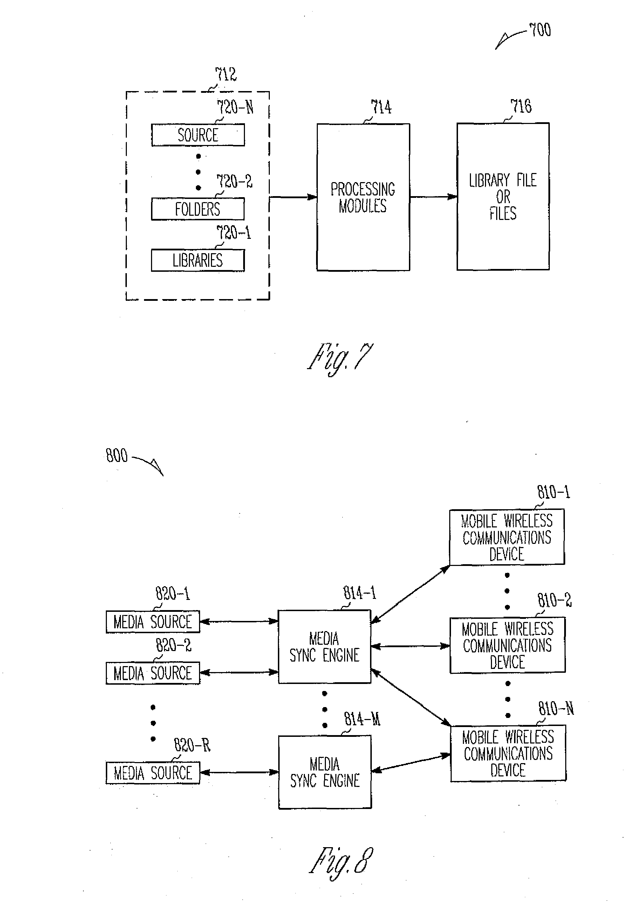

The embodiments shown in Figures 1-6 may be implemented as a desktop application to synchronize media content with a mobile wireless communications device. The embodiments shown in Figure 1-6 may also allow a user to use a mobile wireless communications device to browse and synchronize a library on a PC with a library on the mobile wireless communications device. An example architecture for the embodiments shown in Figures 1 - 6 is shown in Figure 7 below.

In various embodiments, media content is managed in a system. Systems and methods for managing media content may be configured such that the management may be conducted with limited user interaction and, in various embodiments, the system may perform essentially autonomously. Media is a form of general communication, information, or entertainment, which is typically intended to be used by a large audience, thought not limited to a large audience. Various media, or media types, may include, but are not limited to, music, videos, movies, music videos, television shows, interactive applications, audiobooks, podcasts, games, personal presentations, and other presentations. Each form of media may be referred to as media content or media art. An individual item of such media may be referred to as media content or media art. Media content may include content in any media format. Some examples of content may include, but are not limited to, audio files, video files, image files, and multimedia files. Audio file formats may include, but are not limited to, MP3, AIFF, WAV, MPEG-4, AAC, and Apple Lossless. Other example file formats for media content include, but are not limited to, files having extensions doc, dot, wpd, txt, xls, pdf, ppt, jpg, jpeg, png, bmp, gif, html, htm, zip, tif, tiff, and wmf. Associated with a item of media art that is stored or processed on an apparatus is a media file, which when operated on by an associated playing device (player) provides an output that can be presented as communication, information, entertainment, other presentations, or combinations thereof for the user of the player.

Systems that manage media content may include various apparatus such as computer systems or other systems having hardware, software, and/or hardware and software to manage media content. In various embodiments, a personal computer (PC) can be used to manage media content and associated media files. A personal computer, as is generally known, herein refers to computing devices having an operating system (OS) such that use of the personal computer may be conducted by individuals having little or no knowledge of the basics of the underlying hardware and software that operate the PC and whose operation may be conducted without individuals typically authoring computer programs to operate the computer. Portable computers may include portable personal computers. An example of a portable PC is a laptop computer or notebook computer that typically has a display screen, keyboard, underlying hardware and software, and a display pointing device that are all integrated in a housing that can easily be carried by an individual. Some personal digital assistants (PDAs) may be viewed as a type of portable computer. In various embodiments, a PC may include instrumentality for managing media content and instrumentality to operate as a wireless server. A wireless server is a server configuration that communicates with an entity over a channel established by the entities in a wireless network. Other devices, such as mobile wireless communication devices, can be implemented to manage media content.

Various instrumentalities can be realized in hardware implementations, software implementations, and combinations of hardware and software implementations. Some portions of the instrumentalities may be described in terms of algorithms and symbolic representations of operations on data bits within a machine memory. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. The instrumentality may operate to process, compute, calculate, determine, display, and/or conduct other activities correlated to processes of a machine such as a computer system, or similar electronic computing device, that manipulates and transforms data represented as physical (electronic) quantities within the computer system's registers and memories into other data similarly represented as physical quantities within the computer system memories or registers or other such information storage, transmission or display devices. The instrumentality may provide personalized capabilities, provide a pathway to other content, or combinations thereof. The instrumentality may use distributed applications, different numbers and types of software based components that couple two or more applications to enable data transfer between the applications, hardware to provide services from a number of different sources, and may be realized on a variety of platforms such as servers and content management systems. The instrumentality may include or provide access to subroutine code, code libraries, application program interfaces such as interpreters utilizing Java EE^{™}, Simple DirectMedia Layer^{™} (SDL) and DirectX^{™}, combinations thereof, or other such electronic based functionalities.

In various embodiments, a PC manages media content in relationship to one or more mobile devices. Each mobile device can play media files and can interact with the PC with respect to the management of media content on the respective mobile device. In various embodiments, the mobile devices include instrumentalities similar to those of the PC to manage the media content on the mobile device, to browse media files in one or more PCs, and to engage with a PC in interactive management of media content on the mobile device, on the PC, and on other mobile devices in which the media content may be shared. Other apparatus configured with hardware, software, and/or hardware and software to function in a similar manner as the PC to manage media content may be used in conjunction with the mobile devices. The mobile devices may be mobile wireless communications devices.

In an embodiment, a system organizes information associated with media content from multiple media sources into a single unified library file. The information may be organized as indexed information. Managing media content is not limited to a single library file. In various embodiments, more than one library file may be utilized. Access to a library file can be provided to a number of mobile devices. The access may be provided as full access or limited access. For example, access to a library file by a mobile device may be limited to a mobile device based on whether the mobile device has one or more media players to operate on the media content. Other criteria may be used to limit access to a mobile device. In various embodiments, the library file is maintained on the system and is accessed from the mobile device remotely. In various embodiments, a library file or a modified version of a library file can be transferred to the mobile device and the mobile device can access the library file locally. The library file can be used by the mobile device to transfer media content from one or more media sources to the mobile device. The mobile device may have wireless capabilities. The mobile device may be a mobile wireless communication device.

Figure 7 is a functional block diagram of a system 700 for managing media content. System 700 includes inputs 712, processing modules 714, and outputs 716. Inputs 712 include one or more media sources 720 of media content (also herein referred to as "media sources," "media source," "sources," or "source").

Media sources 712 may include media libraries 720-1 for media players such as, but not limited to, libraries for iTunes® audio players, Windows Media Player® (WMP), RealPlayer®, and other players. Each library may include collections of various media content. A collection is a subset of the files in a library. The collections may include references to the files. Each collection may refer to anywhere from zero files to all of the files in the library. An example of a collection of a music library is a playlist. In various embodiments, sources 712 of media content may be files within one or more folders 720-2 on a single computer system or on multiple computer systems.

Processing modules 714 include software and/or hardware that can transfer media content from media sources to devices that use the associated media. Processing modules include instrumentality to operate as a "connector," which means that the processing modules interface with media sources to collect information associated with a media file configured to operate with a specific media player. Processing modules may be arranged with a set of connectors, one for each type of media player incorporated in system 700 or used by mobile devices whose media content is managed by system 700. Processing modules 714 may include connectors to interact with mobile wireless communication devices, where the mobile wireless communication devices can also be a source of media content. Processing modules 714 may use, but are not limited to, a Windows COM interface or a XML file when connecting to various media sources. In addition, processing modules 714 may create a representation (for example, a library or libraries of information regarding the media content) of the media content available from multiple media sources. In various embodiments, media content may include information with respect to another media file that is played by a media player. For instance, a jpeg (Joint Photographic Experts Group) file may be a file of album art for songs on an album, where the media files of the songs are played on a media player.

In various embodiments, output 716 from processing modules 714 is a representation created by processing modules 714. The representation may also be maintained by processing modules 714. Output 716 may include device specific data for a mobile wireless communication device, a media player, or other destination device. Output 716 may comprise metadata, such as metadata based on user preferences or device settings. Generally, metadata is information about data. Various media content may be metadata with respect to other media content. For example, a file having a jpg file format may provide information regarding an audio file having a mp3 file format such that the jpg file is metadata for the mp3 file.

In an example embodiment, the representation may be any means for identifying the content of the media source files. In some embodiments, a library file 716 created by processing modules 714 contains metadata for the media content available in the one or more media sources 720-1 ... 720-N, but omits the actual media content. Library file 716 may be organized using a standard format that represents the information contained in the media sources. In various embodiments, the standard format is a compressed format and/or a format that is substantially smaller than the media library itself. For example, a media library with 30 GB of audio files may be presented by processing modules 714 in a file that may be 200 KB.

In operation, system 700 for managing media content shown in Figure 7 creates a representation of the media content available in one or more media sources 720-1 ... 720-N and provides a means for accessing the media content by any destination device with a media player including a mobile wireless communications device. The destination device may browse the representation and may select individual media content items to copy or transfer from the media source to the destination device. After selection, all or a portion of the media content item may be transferred to the destination device and may be played on a media player on the destination device. In various embodiments, system 700 brings content from multiple media sources into a single unified library 716 and pushes out device specific metadata from the single library to the specific destination device.

Figure 8 is a block diagram of an architecture for transferring media content between media synchronization engines 814-1 ... 814-M of a system 800 and mobile wireless communications devices 810-1 ... 810-N. The media content can be provided from media sources 820-1 ... 820-R. Media sources 820-1 ... 820-R can reside on system 800. The media content in media sources 820-1 ... 820-R may be provided from various sources external to system 800. For instance, media sources 820-1 ... 820-R can be media libraries resident on system 800 that are created as libraries to store media files provided by media stores accessed on the Internet. Media sources 820-1 ... 820-R may contain media files loaded in the system by a user from a portable storage medium such as, but not limited to, a CD or a DVD. Mobile wireless communications devices 810-1 ... 810-N may also be media sources. Media synchronization engines 814-1 ... 814-M (also referred to as media sync engines or media sync applications) that operate in the transferal of a media file may also operate to manage a media library and a metadata library file associated with the media file. The media file can be operated on by a media player to provide the media content for visual and/or audio presentation to a user of system 800 or one or more of mobile wireless communications devices 810-1 ... 810-N.

Media sync engines 814-1 ... 814-M can create representations (such as a library file or files) identifying media content available from multiple media sources and provide data from the library to mobile wireless communications devices 810-1 ... 810-N. In an embodiment, a media sync engine is an example of a processing module shown in Figure 7. In various embodiments, a media sync engine provides a method to synchronize a media library, such as an iTunes® digital music library, a Windows Media Player® digital music library, or other commercial based library, with a smart phone. The files may be transferred using a wireless connection, such as a wireless wide area network, a wireless local area network such as a Wi-Fi network, a personal wireless connection such as a wireless USB connection. The files may be transferred using a wired connection such as a high speed USB connection.

Mobile wireless communications devices 810 may include, but are not limited to, mobile telephones, portable computers, personal digital assistants (PDAs), media players and other devices that may be conveniently carried by a user and provide wireless communication. Mobile telephones include wireless communication devices that have generally been referred to as cell phones. Mobile telephones may include a wide range of communication devices from portable phones with limited functionality beyond voice communication to portable phones capable of providing the functionality of a personal computer. Multiple devices of different types / capabilities may transfer media content using one or more media sync engines.

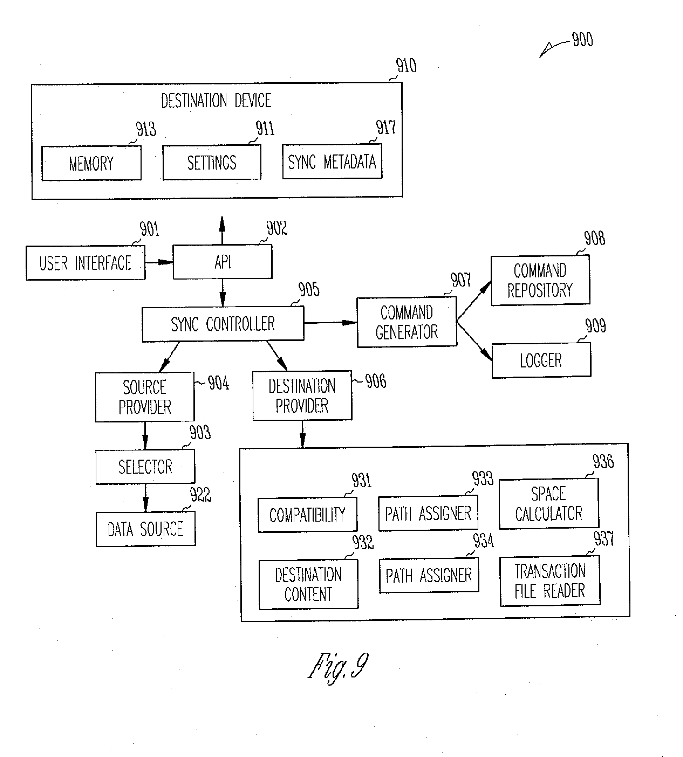

Figure 9 illustrates a block diagram of a system 900 that can synchronize media files with a destination device 910. System 900 can include the functionality of the processing modules 714 shown in Figure 7 and the functionality of media sync engines 814-*i* of Figure 8, according to an example embodiment. System 900 can include a user interface (UI or GUI for graphic user interface) 901, an application programming interface (API) 902, a selector 903, a source provider 904, a sync controller 905, a destination provider 906, and a command generator 907. System 900 may reside on a PC that interacts with one or more mobile wireless devices that are destination devices for media file sync.

System 900 can provide destination device 910 with media files from data source 922. Data source 922 can include a library, which may be arranged as a multimedia library, a music library, a video library, an e-book library, a documents library, or combinations thereof. Though data source 922 is shown as a single entity, it can be configured as multiple data sources. The multiple data sources of data source 922 can operate under different protocols using different data formats. Data source 922 can be configured similar to or identical to sources 720-1, 720-2 .. 720-N of Figure 7 and/or media sources 820-1, 820-2 ... 820-R of Figure 8. Data source 922 can be configured as a data source within system 300, such as a memory system or a database. Data source 922 can be configured external to but accessible by system 900.

API 902, selector 903, source provider 904, sync controller 905, destination provider 906, and command generator 907 can operate to perform multiple tasks, including, but not limited to, functioning as a sync module that includes instrumentality to conduct synchronization operations with one or more destination devices 910. Sync operations can include adding media files to and removing media files from one or more destination devices 910. System 900 can interact with destination device 910 to determine its identity and acquire information on the availability of allocated media storage on the mobile device.

Destination device 910 includes settings 911, memory 913, and sync metadata 937, which components can provide and/or store information corresponding to a sync operation with system 900. Sync metadata 917 can include metadata associated with media content stored and operated on by a media player on destination device 910. Settings 911 can include such information as a personal identification number (PIN). Other information stored in settings 911 can include, but is not limited to, identification of the OS of destination device 910, a user chosen name for destination device 910, and an identification of the version of media sync that destination device 910 is using with respect to system 900.

System 900 includes user interface 901 configured as a mechanism for a user of system 900 to interact with system 900 including providing input for a sync operation with destination device 910. A user of system 900 may receive information regarding the settings of destination device 910 via user interface 901 along with information regarding media content accessible to the user via processes of system 900 or via destination device 910. However, sync controller 902 can manage operation of a sync session such that user related operations are conducted in a background process separate from the user interface. Background operations can be conducted without user interaction, but may use user-related information that is stored in system 900 or stored in a database accessible by system 900.

Selector 903 can include a set of connectors, one or more for each type of media player incorporated in system 900 or in destination devices 910. Selector 903, using appropriate connectors, can identify specific instances of a particular type of library in data source 922. Selector 903 can use its connectors to perform a discovery function that finds individual libraries. A connector for a particular library is capable of communicating with the particular library or a file in the library using a corresponding application programming interface, protocols, file formats, etc. When an individual library is discovered, the connector can retrieve media collections from that instance of the individual library. The connectors of selector 903 may include an iTunes connector, a WMP connector, a RealPlayer connector, an autofill connector, a connector for a specific source of e-books, and various other connectors correlated to instrumentality for operating on the respective media files to provide a presentation to the user of system 900. An individual connector may be configured as a combination of a read only connector and a writeable connector. A writeable connector may perform such activities as adding a user-assigned rating for a song, creating a playlist, editing a playlist, deleting a song, etc. An autofill connector, for example, can be realized as a combination of connectors to perform discovery functions across different libraries during an autofill operation of system 900 for a specific destination device 910.

Selector 903 provides a group mechanism, in that, it functions to maintain account of selections made from data source 922. For example, if music item is chosen, selector 900 maintains the ID of the chosen music item including such information as the number of music tracks in the chosen music item. Selector 903 can be arranged to group various pieces of information data regarding chosen media files.

Source provider 904 determines the type of media data included in a sync session, where it functions as a finder, providing a discovery mechanism for connectors. Functioning as a finder, source provider 904 can identify what connectors of selector 903 are available for processing. The available connectors may register with source provider 904. If a separate connector is used for each type of library, the particular connectors that are discovered by source provider 904 can determine what type of libraries are in system 900. Source provider 904 can be arranged as an aggregation of components (one or many instances) for providing discovery mechanisms.

Destination provider 906 is similar to source provider 904 except that destination provider operates with respect to the types of media data on a particular destination device 910 with which system 900 enters into a sync session. Destination provider 906 can find connectors to interact with one or more destination devices 910, where destination devices 910 can also be sources of media content. Content from destination device 910 can be read into a database of system 900 with the content represented from destination provider 906 correlated to destination device 910.

Destination provider 906 can operate using a set of modules including compatibility 931, destination content 932, path assigner 933, size calculator 934, space calculator 936, and transaction file reader 937. Compatibility 931 can operate to provide information and/or conduct actions to reconcile compatibility such as with different versions of hardware and/or software on designation device 910. Path assigner 933 can operate as a component that calculates unique destination path of a to-be-copied media taking name collisions, associated with different media files, and operating system (OS) path limits into consideration. Size calculator 934 can operate as a component that calculates a future size of a media on a specified destination device 910 where it will be copied. Size calculator 934 can take into account compression (e.g. scaling of images), disk differences (as in physical cluster size of disk) and aids in projecting these estimates on a progress bar displayer by UI 901. Space calculator 936 can operate as to provide input as to an amount of space available for syncing. Transaction file reader 937 can operate to provide a transaction file of what was transacted as part of sync to a specific destination device 910 in a previous sync operation. Transaction file reader 937 can be used to determine a delta to be copied as part of next sync operation to the specific destination device 910. Destination content 932 can operate to provide an identification of what media content already resides on destination device 910 as part of the last sync with the specified destination device 910.

Sync controller 905 provides a path assignment function. It essentially maps the media item from data source 922 to destination device 910. Once the mapping is complete, the appropriate commands and command format is formed by command generator 907 to conduct the sync session with destination device 910.

Command generator 907 can be configured to operate in conjunction with a command repository 908 and a logger 909. Command repository 908 can operate as a repository of commands holding commands to be executed at various stages during a sync operation. Command repository 908 can be configured as an aggregation of components (one or many instances) to hold various commands and/or sets of commands. For example, command repository 908 can include a set of commands for a cleanup stage that implements the deletion of non-essential and temporary files. In another example, command repository 908 can include a set of commands for a copy stage that implements the copying of data and metadata (e.g, album artwork). Logger 909 can operate as a component that logs sync activities and usage statistics, for example, for diagnostics purposes and beta statistics.

API 902 can include instrumentality for managing functions from selection to command generation for a sync session, such that it can provide overall management of a sync session between system 900 and destination device 910. API 902 can provide a unified interface to multiple sources/libraries of data source 922. Under direction of API 902, media collected for a sync session can be collected in a sync set.

The components of system 900 shown in Figure 9 as independent entities can be implemented in an integrated format. The various components of system 900 can be realized as software, hardware, and combinations of software and hardware. The software is implemented as instructions stored in a machine-readable storage medium that can be executed by one or more processors of system 900.

Embodiments, as illustrated in Figures 7-9, and similar embodiments may be implemented as a desktop application to transfer media content from multiple sources to a mobile wireless device or other destination device. The desktop application for managing media content may be launched on a PC. The desktop application may be automatically launched on startup of the PC. The desktop application may be launched on detection of a device connection to the PC. In various embodiments, a user may launch the desktop application. Alternatively, embodiments, as illustrated in Figures 7-9, and similar embodiments may be implemented to allow a mobile wireless device to update content already present on the mobile wireless device with media content from multiple sources.

In various embodiments, a system managing media content can be structured to operate to provide a number of different features. Content from multiple media sources may be entered into a single unified library and device specific metadata may be pushed out from the single library. A library file in a format to provide a compact representation of media metadata may be generated as output of processing modules, similar to processing modules discussed with respect to Figures 7-9. Varying schema can be used for choices to select, group, and rearrange data in the representation in the file format. Various features of a managing system may include maintaining representations of original source identifications so that an identifier such as an ID, a path, etc. may be used to track/manage information regarding different multiple sources of substantially the same media content. Various features of a managing system may include injecting or modifying metadata for a media file during transfer to a device. Examples of injected metadata may include album art, volume settings and other device settings, user preferences, and other parameters.

Various features of the managing system may include a simplified user interface on the PC for transferring information to the mobile device and representing information that is present on the mobile device. The UI may generate representations to provide criteria for handling user selection of media content that exceeds device capacity. In various embodiments, applications in the PC may use the information in the library of the PC to autonomously handle user selection of media content that exceeds device capacity. The UI can provide an automatic fill function, referred to herein as autofill, for a user to select such that the PC automatically handles selection of media content to transfer to the mobile device. In the various embodiments, a mobile device may be a mobile wireless communication device. A mobile wireless communication device may include instrumentality to manage media content in substantially the same manner as a PC.

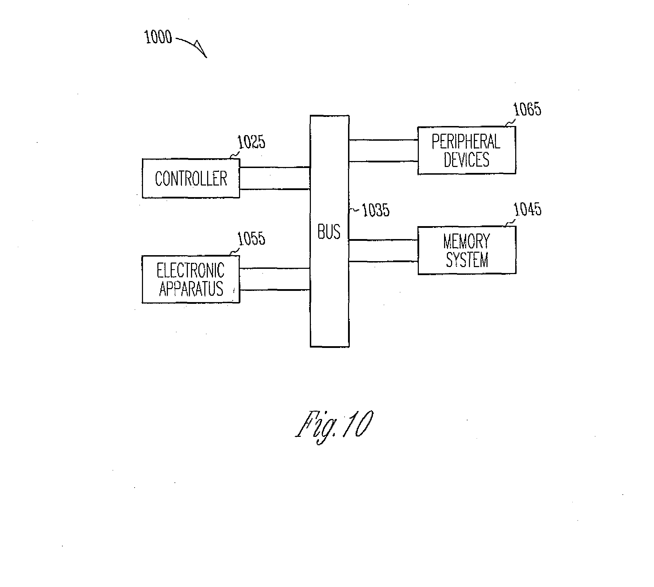

Figure 10 depicts a diagram of an embodiment of a system 1000 having a controller 1025 and a memory system 1045. System 1000 also includes electronic apparatus 1055 and a bus 1035, where bus 1035 provides electrical conductivity among the components of system 1000. In an embodiment, bus 1035 includes an address bus, a data bus, and a control bus, each independently configured. In an alternative embodiment, bus 1035 uses common conductive lines for providing one or more of address, data, or control, the use of which is regulated by controller 1025. Bus 1035 may be realized as multiple busses. In an embodiment, electronic apparatus 1055 is additional memory configured in a manner similar to memory system 1045. In an embodiment, additional peripheral device or devices 1065 are coupled to bus 1035. In an embodiment, peripheral devices 1055 include displays, additional storage memory system, and/or other control devices that may operate in conjunction with controller 1025 and/or memory system 1045. In an embodiment, controller 1025 is realized as one or more processors.

Controller 1025 and memory system 1045 can be arranged to manage media content and associated information on system 1000. In an embodiment, system 1000 is arranged as a PC. The PC may include instrumentality distributed throughout the PC to operate as a wireless server. System 1000 arranged as a PC can operate according to any of the various embodiments discussed herein to manage media content and associated information within the PC and/or in conjunction with one or more mobile devices such as mobile wireless communications devices.

In an embodiment, system 1000 is arranged as a mobile device. The mobile device may be a mobile wireless communications device. System 1000 arranged as a mobile device can operate according to any of the various embodiments discussed herein to manage media content and associated information within the mobile device, and/or in conjunction with a PC or other apparatus having software and/or hardware to manage media content.

Various embodiments or combination of embodiments for apparatus and methods for a system, such as a PC, to manage media content, as described herein, can be realized in hardware implementations, software implementations, and combinations of hardware and software implementations. These implementations may include a tangible or non-transient machine-readable medium having machine-executable instructions, such as a tangible or non-transient computer-readable medium having computer-executable instructions, for operating the system in a relationship with one or more mobile devices such that media content and associated information is managed between the system and the mobile device. The communications of the system with a mobile wireless communications device can be conducted on a secured basis. The machine-readable medium is not limited to any one type of medium. Machine-readable storage media may include, but are not limited to, solid-state memories, optical media, and magnetic media. Non-limiting examples of tangible or non-transient machine-readable storage media include, but are limited to, hard disks, removable magnetic disks, removable optical disks (e.g., compact disks and digital video disks), magnetic cassettes, memory cards, memory sticks, Random Access Memories (RAMs), Read Only Memories (ROMs), and other storage media.

Various embodiments or combination of embodiments for apparatus and methods for a mobile device, such as a mobile wireless communications device, as described herein, can be realized in hardware implementations, software implementations, and combinations of hardware and software implementations. These implementations may include a tangible or non-transient machine-readable medium having machine-executable instructions, such as a tangible or non-transient computer-readable medium having computer-executable instructions, for operating the mobile device to manage its media content and associated information within the mobile device, in conjunction with a system, such as a PC, and/or with respect to other mobile devices. The communications between a mobile wireless communications device and the system can be conducted on a secured basis. The machine-readable medium is not limited to any one type of medium. Machine-readable storage media may include, but are not limited to, solid-state memories, optical media, and magnetic media. Non-limiting examples of tangible or non-transient machine-readable storage media include, but are limited to, hard disks, removable magnetic disks, removable optical disks (e.g., compact disks and digital video disks), magnetic cassettes, memory cards, memory sticks, Random Access Memories (RAMs), Read Only Memories (ROMs), and other storage media.

Embodiments of various systems, methods, and computer readable media have been disclosed for a system for managing media content. In some embodiments, the system for managing media content may allow users to efficiently sort and group images from a centralized cache based on a given grouping/sorting criteria (including, but not limited to, image location in a folder, date/time when image was taken, size of image, etc). In some embodiments, the system for managing media content also may determine the user's view space for images and may only request loading of the images that fit a view space. In some embodiments, the system for managing media content may allow a user to cache out entities in the event that a memory or image count threshold is reached in order to conserve memory for the process and to improve performance. In some embodiments, the system for managing media content also may style images in-memory by efficiently applying pre-defined styles to the loaded thumbnails before handing it out to the visual subscribers.

Although specific embodiments have been illustrated and described herein, it will be appreciated by those of ordinary skill in the art that any arrangement that is calculated to achieve the same purpose may be substituted for the specific embodiments shown. It is to be understood that the above description is intended to be illustrative, and not restrictive, and that the phraseology or terminology employed herein is for the purpose of description. Combinations of the above embodiments and other embodiments will be apparent to those of skill in the art upon studying the above description.

## Claims

1. A method of managing media content, the method comprising:
identifying media files to display in a visible portion of a graphical user interface;
fetching the media files to display in the visible portion of the graphical user interface from a storage device and storing the media files in a cache memory;
sorting the media files in the cache memory into groups based on specified criteria;
displaying the media files using the graphical user interface; and
receiving a selection of at least one of the media files to synchronize with a mobile device.

2. The method of claim 1 wherein sorting the media files further comprises:
for each one of the media files, assigning the media file to a category and adding the media file to a list of media files for the category;
creating a parent group;
for each category, adding the media files assigned to the category to the parent group such that the media files assigned to the category are ordered consecutively in the parent group; and
for each category, creating a child group to maintain an index of a position in the parent group of a first media file in the category and a number of media files in the category.

3. The method of claim 2 further comprising creating the list for the category.

4. The method of any one of claims 1 - 3 further comprising applying a style to at least some of the media files from the cache memory prior to displaying the media files.

5. The method of claim 4 wherein displaying the media files further comprises displaying the at least some of the media files with the style in the graphical user interface.

6. The method of claim any one of claims 1 - 5 wherein fetching further comprises fetching a first set of the media files associated with the visible portion of the graphical user interface without fetching a second set of the media files associated with a non-visible portion of the graphical user interface.

7. The method of any one of claims 1 - 6 further comprising cancelling the act of fetching the media files upon a change in the visible portion of the graphical user interface.

8. The method of claim 6 or claim 7 further comprising requesting an updated set of the media files associated with an updated visible portion of the graphical user interface.

9. The method of any one of claims 1- 8 further comprising clearing a portion of the media files in the cache memory by iterating through the portion of the media files and marking for removal the portion of the media files that are outside a current visible portion of the graphical user interface.

10. The method of any one of claims 1 - 9 wherein the media files are image files.

11. The method of claim 10 wherein the image files are thumbnail images.

12. A non-transient machine-readable medium having machine-executable instructions for executing a method according to any one of claims 1 - 11.

13. An apparatus configured with a media synchronization engine configured to perform the method of any one of claims 1-11.

14. A server comprising:
a media synchronization engine to synchronize media content with a mobile device, the media synchronization engine comprising a thumbnail provider subsystem to sort media files by category and to fetch media files associated with only a visible portion of a graphical user interface.

15. The server of claim 14 wherein the media synchronization engine further comprises a media decorator subsystem to add a style to the media files.
